# EUROPÄISCHE PATENTSCHRIFT

(11) **EP 2 802 243 B1**
(45) Veröffentlichungstag und Bekanntmachung des Hinweises auf die Patenterteilung: **05.09.2018**
(21) Anmeldenummer: 12810242.3
(22) Anmeldetag: 19.12.2012
(51) Int. Cl.: A47J 31/44, B67D 1/00

(54) **GETRÄNKEAUTOMAT**
AUTOMATIC BEVERAGE DISPENSER
DISTRIBUTEUR AUTOMATIQUE DE BOISSON

(30) Priorität: 11.01.2012 DE 102012200322
(43) Veröffentlichungstag der Anmeldung: 19.11.2014
(73) Patentinhaber: BSH Hausgeräte GmbH, 81739 München (DE)
(72) Erfinder: LUIPPOLD, Gregor, 82031 Grünwald (DE)
(86) Internationale Anmeldenummer: PCT/EP2012/076181
(87) Internationale Veröffentlichungsnummer: WO 2013/104502

(56) Entgegenhaltungen:
- WO-A1-2009/048222
- DE-A1-102010 008 270
- US-A- 5 000 348
- US-A- 5 788 840
- US-B1- 6 648 185

## Beschreibung

Ausführungsbeispiele beziehen sich auf einen Getränkeautomat, beispielsweise ein Heißgetränkesystem, ein Multigetränkesystem oder ein Kaffeesystem, wie beispielsweise ein Kaffeepad-Kaffeesystem oder ein Kapsel-Kaffeesystem.

### Stand der Technik

Getränkeautomaten, die zur Abgabe eines Getränks in einen Getränkebehälter bestimmt sind, werden sowohl privat wie auch geschäftlich genutzt. So sind insbesondere in den letzten Jahren Kaffeesysteme, die auf Basis von Kaffeepads oder Kapseln arbeiten, sowohl im privaten wie auch im geschäftlichen Umfeld häufiger anzutreffen.

Aber auch bei anderen Getränkeautomaten für Heißgetränke, beispielsweise Tees oder auf Milch basierenden Getränken, wie beispielsweise Kakao, werden entsprechende Getränkeautomaten verwendet. Die Auswahl des jeweiligen Getränks erfolgt hierbei häufig über einen Wahlschalter oder über die Auswahl einer der vorgenannten Pads oder Kapseln.

Bei auf dem Markt verfügbaren Getränkeautomaten wird hierbei typischerweise das zuzubereitende Getränkt durch Einlegen einer Kapsel oder eines Pads in den Getränkeautomat bzw. durch Wählen eines entsprechenden Getränks über ein Bedienfeld ausgewählt. Anschließend wird die Tasse auf eine hierzu vorgesehen Abstellfläche des Getränkeautomaten gestellt, bevor über eine gesonderte Start-/Stopp-Taste als Bedienelement die Getränkezubereitung ausgelöst wird. Die Start-/Stopp-Taste ist hierbei typischerweise eine zur Bedienung mit dem Finger einer Hand ausgelegte Taste.

Häufig wird trotz der vergleichsweise einfachen Bedienung eines solchen Getränkeautomaten diese jedoch als störend empfunden. Beispielsweise im Büroalltag kann das Abstellen der Tasse unter dem Auslass des Getränkeautomaten und das anschließende separate Bedienen des Start-/Stopp-Tasters als störend oder zumindest lästig empfunden werden, wenn der Benutzer beispielsweise Akten oder andere Gegenstände mit sich führt.

Aber auch bei anderen Getränkesystemen, die beispielsweise Kaltgetränke, wie Wasser, Mineralwasser, Fruchtsäfte, Fruchtsaftgetränke, Mixgetränke, Softdrinks oder andere auch alkoholische Getränke ausgeben, wird die Bedienung der Getränkesysteme vom Benutzer häufig als störend empfunden.

So sind aus der US 5,000,348 A, der US 5,788,840 A und der US 6,648,185 B1 Getränkeautomaten bekannt, die durch eine auf einen unterhalb des Auslasses angeordneten Hebel nach hinten gerichtete Kraft in Betrieb genommen werden können. Ferner ist aus der DE 10 2010 008 270 A1 eine Kaffeemaschine mit einem Näherungsschalter bekannt.

Die Druckschrift WO 2009/048222 A1 befasst sich mit einem Getränkeautomaten, bei dem auf einer Gehäuseseite ein Schaltelement angeordnet ist, das unter anderem zum Bedienen mit einem Getränkebehälter geeignet ist.

### Der Erfindung zugrundeliegende Aufgabe

Es besteht daher ein Bedarf, die Bedienung eines Getränkeautomaten zu vereinfachen, ohne jedoch eine intuitive Bedienung des Getränkeautomaten aufgeben zu müssen.

### Erfindungsgemäße Lösung

Die Bezugszeichen in sämtlichen Ansprüchen haben keine einschränkende Wirkung, sondern sollen lediglich deren Lesbarkeit verbessern.

Diesem Bedarf wird ein Getränkeautomat gemäß Patentanspruch 1 gerecht.

Ein Getränkeautomat gemäß einem Ausführungsbeispiel umfasst einen Auslass für ein Getränk, eine Abstellfläche für einen Getränkebehälter, die derart angeordnet ist, dass der Getränkebehälter so unter dem Auslass abstellbar ist, dass das Getränk von dem Auslass in den auf der Abstellfläche abgestellten Getränkebehälter entlang eines Fließwegs fließen kann, und einer Schaltfläche zum Bedienen des Getränkeautomaten. Die Schaltfläche ist hierbei wenigstens abschnittsweise im Wesentlichen senkrecht zu einer Einführrichtung des Getränkebehälters derart angeordnet und ausgebildet, dass die Schaltfläche von einem Benutzer des Getränkeautomaten durch den Getränkebehälter bei einem Einführen desselben entlang der Einführrichtung unter den Auslass bedienbar ist, und dass die Schalfläche von dem Benutzer des Getränkeautomaten ebenfalls mit Hilfe eines Fingers bedienbar ist, wenn der Getränkebehälter unter dem Auslass angeordnet ist, ohne dass der Benutzer in den Fließweg greifen muss. Die Schaltfläche ist erfindungsgemäß über einen Wippmechanismus betätigbar, wobei der Wippmechanismus eine Wippachse aufweist, die bezogen auf eine Projektion des Fließweges entlang der Einführrichtung auf die Schaltfläche hin seitlich versetzt ist, und/oder der Getränkeautomat genau ein Schaltelement umfasst, um eine Betätigung des Wippmechanismus unabhängig von der Bewegungsrichtung der Schaltfläche erfassbar zu machen.

Einem Ausführungsbeispiel eines Getränkeautomaten liegt so die Erkenntnis zugrunde, dass die Bedienung desselben dadurch vereinfacht werden kann, dass die Schalfläche gerade so angeordnet und ausgebildet ist, dass diese von dem Benutzer bereits während des Einführens des Getränkebehälters mit dem Getränkebehälter bedienbar ist. Eine eher konventionelle und intuitive Bedienung wird jedoch durch ein Ausführungsbeispiel eines Getränkeautomaten auch weiterhin dadurch ermöglicht, dass die Schaltfläche ebenso so angeordnet und ausgebildet ist, dass selbst bei einem unter dem Auslass angeordneten Getränkebehälter die Schaltfläche mit Hilfe eines Fingers des Benutzers bedienbar ist, ohne dass dieser in den Fließweg des Getränks greifen muss, also ohne sich einer Gefahr einer Verletzung durch ein heißes Getränke oder der Gefahr einer Verschmutzung durch das Getränk aussetzen zu müssen.

Der Getränkebehälter kann hierbei beispielsweise eine Tasse, ein Becher oder ein Glas sein. Ein Getränkeautomat gemäß einem Ausführungsbeispiel kann hierbei für einen oder auch für mehrere Getränkebehälter unterschiedlicher Art ausgebildet sein. Ein Getränkebehälter, für den ein Ausführungsbeispiel eines Getränkeautomaten ausgebildet ist, wird auch als für den betreffenden Getränkeautomaten spezifizierten Getränkebehälter bezeichnet. Ein solcher weist im Allgemeinen - abgesehen von Griffen, Verzierungen und ähnlichen Strukturen - eine runde bzw. kreisrunde Grundfläche auf, die sich gegebenenfalls entlang einer Achse des Getränkebehälters zwischen einem minimalen und einem maximalen Wert ändert. Auch wenn im Folgenden ein spezifizierter Getränkebehälter stets als ein solcher angenommen wird, der eine kreisrunde Grundfläche - abgesehen von Griffen, Verzierungen und ähnlichen Strukturen - aufweist, können selbstverständlich je nach konkreter Ausgestaltung des Getränkeautomaten gemäß einem Ausführungsbeispiel auch anders geformte bzw. anders geartete Getränkebehälter verwendet werden.

Der Fließweg des Getränks führt von dem Auslass des Getränkeautomaten in ein Inneres des Getränkebehälters. Der Auslass des Getränkeautomaten ist typischerweise als Düse, Ausfluss oder Öffnung ausgestaltet, aus der das zubereitete Getränk austritt und in das Innere des Getränkebehälters gelangt. Das Getränk wird hierbei häufig unter einem geringen Druck aus dem Auslass gefördert, sodass dieses im Wesentlichen der Schwerkraft folgt und so in den Getränkebehälter gelangt. Bei einer vorgesehenen und spezifizierten Aufstellung des Getränkeautomaten ist so der Auslass häufig derart ausgerichtet, dass dieser das Getränk entlang der Schwerkraft nach unten abgibt. Anders ausgedrückt gibt bei vielen Ausführungsbeispielen der Getränkeautomat das Getränk von einem oberhalb des Getränkebehälters angeordneten Auslasses nach unten ab. Selbstverständlich können bei anderen Ausführungsbeispielen auch anderen Orientierungen des Auslasses sowie andere, höhere Druckverhältnisse an diesem herrschen, wenn der Getränkeautomat das entsprechende Getränk abgibt.

Der Benutzer führt bei Benutzung des Getränkeautomaten den Getränkebehälter entlang der Einführrichtung unter den Auslass. Die Einführrichtung ist hierbei häufig ein Abschnitt einer Geraden, entlang derer der Benutzer den Getränkebehälter bewegt. Handelt es sich beispielsweise bei dem Getränkebehälter um eine Tasse, kann die Einführrichtung beispielsweise senkrecht zu einer Gehäusefläche des Getränkeautomaten führen, die im Bereich des Auslasses angeordnet ist.

Die Schaltfläche erstreckt sich hierbei wenigstens abschnittsweise im Wesentlichen senkrecht zu der Einführrichtung des Getränkebehälters. Diese kann beispielsweise senkrecht zu der Einführrichtung gerade, also entlang eines ebenen Abschnitts ausgeformt sein, kann jedoch auch gewölbt, beispielsweise konkav ausgestalte sein. Selbstverständlich kann die Schaltfläche auch vollständig senkrecht zu der Einführrichtung des Getränkebehälters angeordnet sein.

Vorteilhafte Aus- und Weiterbildungen, welche einzeln oder in Kombination miteinander eingesetzt werden können, sind Gegenstand der abhängigen Ansprüche. Die Bezugszeichen in den Ansprüchen haben keine einschränkende Wirkung, sondern sollen lediglich deren Lesbarkeit verbessern.

Bei einem Ausführungsbeispiel eines Getränkeautomaten kann hierbei der senkrecht zu der Einführungsrichtung des Getränkebehälters verlaufende Abschnitt beispielsweise entlang einer Projektionsrichtung des Auslasses auf die Schalfläche entlang der Einführrichtung angeordnet sein. Bei einem Getränkeautomaten gemäß einem Ausführungsbeispiel können so gegebenenfalls kompaktere Gehäuse realisiert werden. So kann es beispielsweise möglich sein eine Breite des Gerätes, also eine Breite eines Gehäuses des Getränkeautomaten zu reduzieren, da das Bedienfeld (User Interface) in einen Bereich des Gehäuses - gesehen entlang der Einführrichtung - hinter den Brühraum bzw. hinter den Auslass gerückt werden kann. Hierdurch kann gegebenenfalls ergänzend oder alternativ also nicht nur eine Vereinfachung der Bedienung des Getränkeautomaten erzielt werden, ohne seine intuitive Bedienung zu gefährden, es kann gegebenenfalls auch eine Gerätegröße reduziert werden.

Bei einem Getränkeautomaten gemäß einem Ausführungsbeispiel kann die Schaltfläche derart ausgebildet und angeordnet sein, dass die Schalfläche bei einem auf der Abstellfläche abgestellten Getränkebehälter durch seitliches Drücken entlang der Einführrichtung und/oder schräg zu der Einführrichtung durch den Benutzer bedienbar ist. Hierdurch kann das Gehäuse des Getränkeautomaten gegebenenfalls weiter hinsichtlich seiner Breite reduziert werden, da die Schaltfläche des Getränkeautomaten nicht nur entlang der Einführrichtung, sondern ergänzend oder alternativ auch schräg zu derselben bedienbar ist.

Ein Getränkeautomat gemäß gemäß der vorliegenden Erfindung weist ein Gehäuse auf, wobei das Gehäuse eine wenigstens abschnittsweise im Wesentlichen senkrecht zu der Einführrichtung verlaufende Gehäusefläche aufweist. Erfindungsgemäß ist die Schaltfläche hierbei als Teil der Gehäusefläche ausgebildet. Hierdurch kann es möglich sein, die Schaltfläche als integralen Bestandteil des Gehäuses auszuführen, sodass dieser sich nicht nur optisch gefällig in das Gehäuse einfügt, es kann vielmehr auch gegebenenfalls eine gegen Beschädigungen und/oder Verschmutzungen resistentere Ausführung der Schaltfläche erzielt werden. Ergänzend oder alternativ hierzu kann es gegebenenfalls auch möglich sein, durch diese Maßnahme eine Dimension des Gehäuses, beispielsweise seine Breite oder auch seine Höhe kompakter auszugestalten, da die Schalfläche nunmehr als Teil des Gehäuses, also der Verkleidung des Getränkeautomaten ausgestaltet werden kann. Die Gehäusefläche kann hierbei ähnlich wie die Schaltfläche eine ähnliche Ausrichtung zu der Einführrichtung aufweisen.

Bei einem solchen Getränkeautomat gemäß einem Ausführungsbeispiel kann sich die Schaltfläche im Wesentlichen über die gesamte Breite senkrecht zu der Einführrichtung und des Fließwegs der Gehäusefläche erstrecken. Hierdurch kann es möglich sein, nicht nur ein kompakteres Gehäuse zu erzielen, sondern gegebenenfalls auch eine leichter zu reinigende bzw. verschmutzungsresistentere und/oder beschädigungsresistentere Ausgestaltung der Schalfläche zu ermöglichen.

Bei einem Getränkeautomaten gemäß einem Ausführungsbeispiel kann sich die Schaltfläche ausgehend von einer Projektion des Fließweges entlang der Einführrichtung auf die Schaltfläche zu beiden Seiten der Projektion wenigstens um einen maximalen Radius eines für den Getränkeautomaten spezifizierten Getränkebehälters erstrecken. Hierdurch kann es möglich sein, eine sicherere und damit einfachere Bedienung des Getränkeautomaten zu ermöglichen, da auch bei einem nicht präzise mittig unter den Auslass angesetzten Getränkebehälter ein sichereres Auslösen der Funktionalität des Getränkeautomaten ermöglicht werden kann.

Bei einem erfindungsgemäßen Getränkeautomaten ist die Schaltfläche über einen Wippmechanismus betätigbar. Ein Wippmechanismus kann hierbei eine mechanisch stabilere, weniger zu Verkantungen neigende mechanische Übersetzung der Bewegung ermöglichen, sodass ein im Zusammenhang mit dem Wippmechanismus verwendetes Schaltelement sicherer auslöst. Auch hierdurch kann somit eine Vereinfachung der Bedienung des Getränkeautomaten erzielt werden.

Bei einem solchen Getränkeautomaten kann der Wippmechanismus eine Wippachse aufweisen, die bezogen auf eine Projektion des Fließweges entlang der Einführrichtung auf die Schaltfläche hin seitlich versetzt ist. Im Falle einer symmetrischen Ausgestaltung der Schaltfläche kann so die Wippachse beispielsweise seitlich versetzt zu einer Mitte der Schaltfläche angeordnet sein. Hierdurch kann gegebenenfalls eine erleichterte und damit vereinfachte Bedienung des Getränkeautomaten dadurch erzielt werden, dass eine über den Getränkebehälter ausgeübte Kraft auf die Schaltfläche mit einer größeren Wahrscheinlichkeit in einem größeren Abstand zu der Wippachse ausgeübt wird, sodass ein resultierendes Drehmoment bei gleicher Krafteinwirkung entsprechend größer ist, und damit eine leichtgängigere bzw. leichtere Betätigung des Wippmechanismus ermöglicht wird. Anders ausgedrückt, kann hierdurch gegebenenfalls ein Kraftaufwand zur Betätigung der Schaltfläche reduziert und damit eine Betätigung derselben erleichtert werden.

Unabhängig von der Positionierung der Wippachse kann bei einem solchen Getränkeautomaten genau ein Schaltelement verwendet werden, um eine Betätigung des Wippmechanismus unabhängig von der Bewegungsrichtung der Schaltfläche erfassbar zu machen. Hierdurch kann ein Mehraufwand im Geräteinneren durch zusätzliche Schaltelemente vermieden werden. Ebenso kann hierdurch eventuell eine technisch komplexere Lösung mit mehreren Schaltelementen vermieden werden.

Bei einem Getränkeautomat gemäß einem Ausführungsbeispiel kann ein Abstand des Auslasses von der Schaltfläche entlang der Einführrichtung kleiner als ein 2-faches eines minimalen Radius eines für den Getränkeautomaten spezifizierten Getränkebehälters sein. Hierdurch kann es möglich sein, auch kleinere Getränkebehälter, beispielsweise Espressotassen, zur Betätigung der Schaltfläche zu verwenden. Gegebenenfalls kann es in diesem Zusammenhang jedoch ratsam sein, den Abstand des Auslasses von der Schaltfläche entlang der Einführrichtung wenigstens der Art auszulegen, dass dieser wenigstens ein 2-faches einer maximalen Wandstärke eines für den Getränkeautomaten spezifizierten Getränkebehälters aufweist. Hierdurch können auch Getränkebehälter mit einer großen Wandstärke sicher befüllt werden, wie dies beispielsweise Getränkebehälter aus Steingut oder Getränkebehälter mit einer auf einem Vakuum basierenden Wärmeisolationstechnik häufig aufweisen.

Ein Getränkeautomat gemäß einem Ausführungsbeispiel kann ein Heißgetränkesystem, ein Multigetränkesystem oder ein Kaffeesystem, beispielsweise eine Kaffeepad-Kaffeesystem oder ein Kapsel-Kaffeesystem umfassen.

Ein Getränkeautomat gemäß einem Ausführungsbeispiel ermöglicht so gegebenenfalls mit einfachen konstruktiven und kostengünstigen Mitteln eine Vereinfachung der Bedienung eines Getränkeautomaten ohne jedoch eine intuitive Bedienung desselben zu erschweren. Darüber hinaus kann es gegebenenfalls möglich sein eine optisch gefällige, robustere und gegebenenfalls kompaktere Ausführung eines Getränkeautomaten bereitzustellen.

### Kurzbeschreibung der Zeichnungen

Weitere vorteilhafte Ausgestaltungen werden nachfolgend an Hand von in den Zeichnungen dargestellten Ausführungsbeispielen, auf welche die Erfindung jedoch nicht beschränkt ist, näher beschrieben.
Fig. 1 zeigt einen Getränkeautomat gemäß einem Ausführungsbeispiel, bei dem die Schaltfläche mit dem Finger bedient wird, während ein Getränkebehälter unter den Auslass gehalten wird;
Fig. 2 zeigt den Getränkeautomat aus Fig. 1, bei dem die Schalfläche über einen Getränkebehälter bedient wird;
Fig. 3 zeigt den Getränkeautomat aus den Fig. 1 und 2, bei dem ein Getränkebehälter auf der Abstellfläche abgestellt ist und die Schaltfläche mit einem Finger bedient wird; und
Fig.4 zeigt einen Wippmechanismus mit genau einem Schaltelement, wie er beispielsweise im Zusammenhang mit einem Getränkeautomaten gemäß einem Ausführungsbeispiel eingesetzt werden kann.

### Detaillierte Beschreibung der Ausführungsbeispiele

Bei der nachfolgenden Beschreibung bevorzugter Ausführungsformen der vorliegenden Erfindung bezeichnen gleiche Bezugszeichen gleiche oder vergleichbare Komponenten.

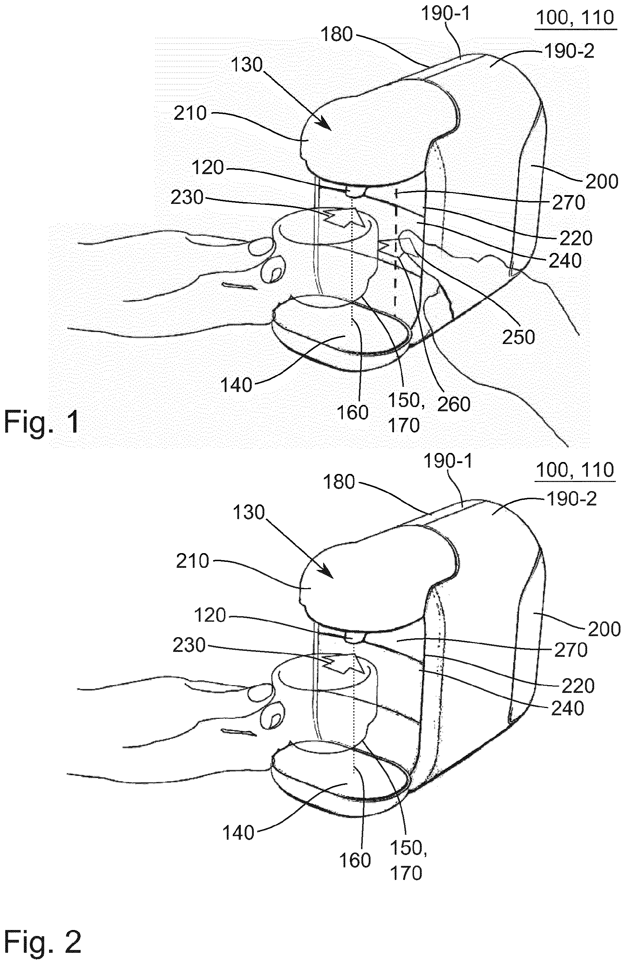

Fig. 1 zeigt eine perspektivische Darstellung eines Getränkeautomaten 100 gemäß einem Ausführungsbeispiel, bei dem es sich genauer gesagt um eine Kaffeemaschine 110 handelt, die beispielsweise auf Basis von Kaffeepads arbeiten kann. Die Kaffeemaschine 110 weist einen Auslass 120 für ein Getränk auf, der am Ende einer in Fig. 1 nicht gezeigten Brühkammer 130 für ein Kaffeepad angeordnet ist.

Die Kaffeemaschine 110 weist ferner eine Abstellfläche 140 auf, die für einen Getränkebehälter 150 zum Abstellen desselben vorgesehen ist. Die Abstellfläche 140 ist hierbei derart angeordnet und ausgebildet, dass der Getränkebehälter 150 so unter den Auslass 120 abstellbar ist, dass das Getränk, welches in Fig. 1 nicht gezeigt ist, von dem Auslass 120 in den auf der Abstellfläche abgestellten Getränkebehälter 150 entlang eines Fließwegs 160 fließen kann. Der Fließweg 160 ist hierbei in Fig. 1 als punktierte Linie eingezeichnet.

Bei der in Fig. 1 gezeigten Kaffeemaschine 110 sind die Brühkammer 130 und der Auslass 120 derart ausgelegt, dass das Getränk den Auslass 120 unter einem niedrigen Druck verlässt. Entsprechend folgt der Fließweg 160 im Wesentlichen der Schwerkraft und bildet daher eine Näherungsweise abwärts gerichtete Gerade bzw. einen Abschnitt einer solchen Geraden.

Bei dem in Fig. 1 gezeigten Getränkebehälter handelt es sich um eine Tasse 170, wobei jedoch auch jeder andere Getränkebehälter zusammen mit einem Getränkeautomat 100 gemäß einem Ausführungsbeispiel verwendet werden können. So kann anstelle der in Fig. 1 gezeigten Tasse 170 als Getränkebehälter 150 ebenso ein Glas, eine Glastasse, ein Becher oder auch eine Kanne verwendet werden, um nur einige der möglichen Getränkebehälter 150 zu nennen. Da es sich bei dem Getränkeautomat 100 um eine Kaffeemaschine 110 handelt, kann es sich bei dem entsprechen Getränkt, welches von dem Getränkeautomaten 100 zubereitet wird, beispielsweise um einen Kaffee oder einen auf einem Kaffee beruhenden Mischgetränk handeln, also beispielsweise einem Cappuccino. Es können jedoch ebenso andere, beispielsweise milchbasierte Getränke, also beispielsweise Kakao oder kakaohaltige Getränke, ebenso wie Tees mit Hilfe eines entsprechenden Getränkeautomaten 100 bereitgestellt werden. Insofern handelt es sich bei dem in Fig. 1 gezeigten Getränkeautomaten 100, auch wenn dieser häufig als Kaffeemaschine 110 bezeichnet wird, eher um ein Heißgetränkesystem, ein Multigetränkesystem bzw. ein komplexeres Kaffeesystem. Dieses kann nicht nur auf Basis von Kaffeepads, wie dies vorher beschrieben wurde, sondern ebenso beispielsweise auf Basis von entsprechenden Kapseln oder auch auf Basis eines anderen Getränkewahlsystems arbeiten. So kann es sich beispielsweise auch um einen Kaffeevollautomaten mit einem Mahlwerk handeln, der mit ganzen Kaffeebohnen befüllt wird.

Der Getränkeautomat 100 weist hierbei ein Gehäuse 180 auf, welches mehrteilig ausgeführt ist. So umfasst das Gehäuse 180 beispielsweise zwei Gehäuseschalen 190-1, 190-2, einen Flüssigkeitsbehälter 200 für die zur Bereitung der Getränke notwendige Flüssigkeit, also beispielsweise Wasser oder Milche, sowie eine Abdeckung 210 für die Brühkammer 130.

Darüber hinaus weist das Gehäuse 180 des Getränkeautomaten 100 ferner eine Gehäusefläche 220 auf, die im vorderen Bereich des Getränkeautomaten 100 angeordnet ist. Die Gehäusefläche 220 ist im Bereich des Auslasses 120 und im Bereich der Abstellfläche 140 zwischen diesen beiden angeordnet. Diese ist hierbei derart ausgerichtet, dass sie wenigstens abschnittsweise im Wesentlichen senkrecht zu einer Einführrichtung 230 des Getränkebehälters 150 unter den Auslass 120 angeordnet ist. Genauer gesagt ist die Gehäusefläche 220 hierbei derart zwischen dem Auslass 120 und der Abstellfläche 140 angeordnet, dass bei einem Einführen des Getränkebehälters 150 entlang der Einführrichtung 230 dieser in Kontakt mit der Gehäusefläche 220 bringbar ist, während sich der Getränkebehälter 150 derart unter dem Auslass 120, also in dem Fließweg 160 befindet, dass der Getränkebehälter 150 mit dem Getränk befüllbar ist.

Die Gehäusefläche 220 weist als ein Teilsegment eine Schaltfläche 240 auf, die beispielsweise zum Einschalten, zum Ausschalten, zum Aktivieren der Getränkeausgabe oder auch zum Deaktivieren der Getränkeausgabe sowie gegebenenfalls zu anderen Zwecken verwendet werden kann. Sowohl die Schaltfläche 240 als auch die Gehäusefläche 220 sind bei dem in Fig. 1 gezeigten Ausführungsbeispiel eines Getränkeautomaten 100 im Wesentlichen senkrecht zu der Einführrichtung 230 ausgerichtet. Beide sind hier Fall leicht konkav gekrümmt ausgeführt und erstrecken sich im Wesentlichen über die gesamte Breite des Gehäuses 180 senkrecht zu der Einführrichtung 230 und dem Fließweg 160. Hierdurch erstreckt sich auch die Schaltfläche 240 im Wesentlichen über die gesamte Breite der Gehäusefläche 220 senkrecht zu den beiden zuvor genannten Richtungen.

Die Schaltfläche 240 ist hierbei derart angeordnet und ausgebildet, dass diese sowohl von einem Benutzer des Getränkeautomaten 100 durch den Getränkebehälter 140 bei einem Einführen desselben entlang der Einführrichtung 230 unter den Auslass 120 bedienbar ist, als auch dass sie von dem Benutzer mit Hilfe eines Fingers 250 bedienbar ist, wenn der Getränkebehälter 150 unter dem Auslass 120 angeordnet ist, ohne dass der Benutzer in den Fließweg 160 greifen muss, ein Finger 250 des Benutzers in den Fließweg ragt. Um dies zu ermöglichen, ist die Schaltfläche 240 gerade so ausgebildet und angeordnet, dass diese bei einem auf der Abstellfläche 140 abgestellten Getränkebehälter 150 durch ein seitliches Drücken entlang einer Bedienrichtung 260 durch den Benutzer bedienbar ist. Die Bedienrichtung 260 kann hierbei parallel und/oder schräg zu der Einführrichtung 230 verlaufen. Fig. 1 zeigt hierbei den Fall, bei dem die Bedienrichtung 260 und die Einführrichtung 230 zusammenfallen, sodass die Schaltfläche 240 also durch ein seitliches Drücken entlang der Einführrichtung 230 durch den Benutzer bedienbar ist.

Der Getränkeautomat 100 gemäß einem Ausführungsbeispiel, wie er beispielsweise in Fig. 1 gezeigt ist, ermöglicht so ein Direktbedienung eines Heiß-/Multigetränkegeräts, die intuitiv ist und eine direkte Bedienung eines Start-/Stopp-Feldes, nämlich der Schaltfläche 240, zur Getränkeerzeugung ermöglicht. Die Bedienung der Schaltfläche 240 kann hierbei durch den Getränkebehälter 150 oder auch durch einen Finger 250 des Benutzers erfolgen.

Um die Bedienung des Getränkeautomaten 100 gemäß einem Ausführungsbeispiel weiter zu vereinfachen, ist die Schaltfläche 240 großflächig ausgeführt, wie dies bereits zuvor erläutert wurde. So erstreckt sich die Schaltfläche 240 ausgehend von einer Projektion des Fließwegs 160 entlang der Einführrichtung 230 auf die Schaltfläche 240 zu beiden Seiten der Projektion wenigstens um einen maximalen Radius eines für den Getränkeautomaten spezifizierten Getränkebehälters. Hierdurch kann es möglich sein, auch bei einem nicht präzise angesetzten Getränkebehälter 150 die Schaltfläche 240 zu bedienen. Ebenso kann es hierdurch möglich sein, selbst bei einem ideal eingeführten Getränkebehälter 150 die Schaltfläche 240 durch ein schräges Drücken bzw. durch einen schräg herangeführten Finger 250 zu bedienen, wie dies beispielsweise auch in Fig. 1 illustriert ist.

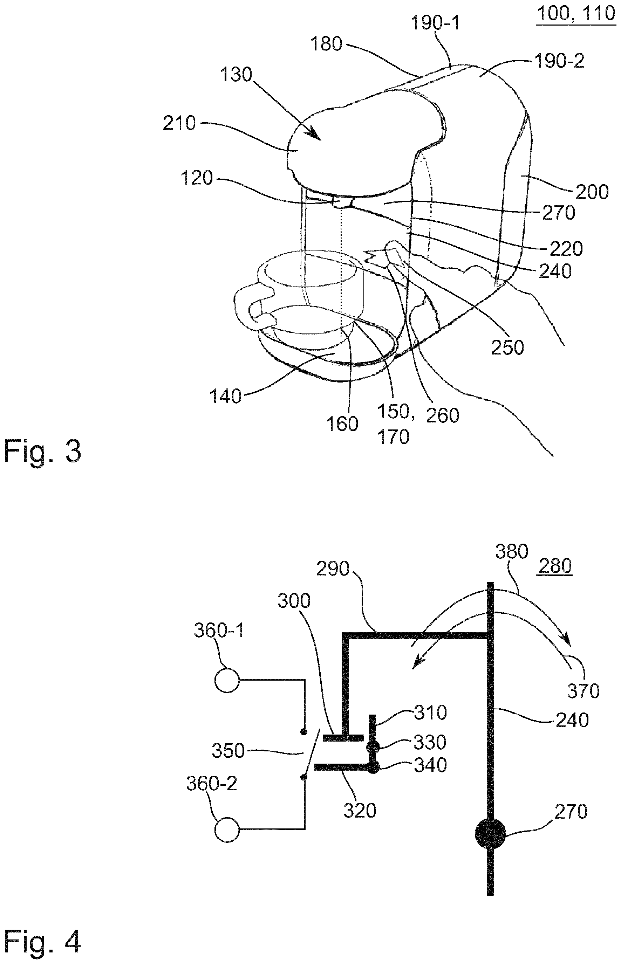

Die Schaltfläche 260 kann beispielsweise über einen Wippmechanismus betätigbar sein. Ein solcher Wippmechanismus weist eine in Fig. 1 als gestrichelte Linie eingezeichnete Wippachse 270 auf, um die die als Wippfläche ausgeführte Schaltfläche 240 um einen gegebenenfalls von der Richtung abhängigen Winkelbereich verkippbar ist. Die Achse 270 für die Wippe bzw. das Bedienelement bzw. die Schaltfläche 240 ist bei dem in Fig. 1 gezeigten Ausführungsbeispiel eines Getränkeautomaten leicht seitlich bezogen auf eine Projektion des Fließwegs 160 entlang der Einführrichtung 230 auf die Schaltfläche 240 hin versetzt. Anders ausgedrückt ist die Wippachse 270 aufgrund der symmetrischen Ausgestaltung der Gehäusefläche 220 und der Schaltfläche 240 seitlich zu einer Mitte der Schaltfläche 240 und der Gehäusefläche 220 versetzt. Hierdurch kann eine Bedienung der Schaltfläche 240 gegebenenfalls dadurch erleichtert werden, dass bei einer durch den Getränkebehälter 150 oder den Finger 250 ausgeübten Kraft auf die Schaltfläche 240 aufgrund der seitlichen Versetzung von der Mitte der Schaltfläche 240 weg ein größeres Drehmoment auf die als Wippe ausgeführte Schaltfläche 240 wirken kann, sodass bei gleichen Kraftaufwand ein größeres Drehmoment und damit eine leichtere Bedienung der Schaltfläche 240 ermöglicht wird. Ebenso kann, wie dies in Fig. 1 angedeutet ist, durch eine entsprechende seitliche Versetzung der Wippachse 270 gegebenenfalls durch eine Bestimmung der Richtung der Verdrehung der Schaltfläche 240 um die Wippachse 270 herum bestimmt werden, ob über einen Getränkebehälter 150 oder einen Finger 250 die Bedienung der Schaltfläche 240 erfolgt ist. Wie im Zusammenhang mit Fig. 4 noch näher erläutert wird, kann ein solcher Getränkeautomat 100 gemäß einem Ausführungsbeispiel genau ein Schaltelement umfassen, um eine Betätigung des Wippmechanismus unabhängig von der Bewegungsrichtung der Schaltfläche 240 erfassbar zu machen.

Bevor im Zusammenhang mit den Fig. 2 und 3 die unterschiedlichen Bedienmöglichkeiten des Getränkeautomaten 100 gemäß einem Ausführungsbeispiel näher erläutert werden, sofern sie nicht bereits in Fig. 1 dargestellt sind, bietet es sich an, darauf hinzuweisen, dass bei einem Getränkeautomat 100 gemäß einem Ausführungsbeispiel ein Abstand des Auslasses 120 von der Schaltfläche 240 entlang der Einführrichtung 230 kleiner als ein 2-faches eines minimalen Radius eines für den Getränkeautomaten 100 spezifizierten Getränkebehälters 150 sein sollte. Ansonsten kann es gegebenenfalls möglich sein, dass der Fließweg 160 bei einem Bedienen der Schaltfläche 240 nicht mehr das Getränk in das Innere des Getränkebehälters 150 führt. Selbstverständlich bleibt jedoch in einem solchen Fall die Möglichkeit, den Getränkeautomaten 100 auch mit Hilfe eines Fingers zu bedienen.

Darüber hinaus kann es gegebenenfalls ratsam sein, den Abstand zwischen dem Auslass 120 und der Schaltfläche 240 wenigstens so groß zu wählen, wie eine 2-Faches einer maximalen Wandstärke eines Getränkebehälters eines für den Getränkeautomaten 100 spezifizierten Getränkebehälter sein kann. Hierdurch kann gegebenenfalls sichergestellt werden, dass überhaupt der betreffende Getränkebehälter im Zusammenhang mit dem Getränkeautomaten 100 verwendet werden kann. Als besonders dickwandige Getränkebehälter 150 sind beispielsweise solche aus Steingut oder solche mit einem auf einem Vakuum basierenden thermischen Isolationsmechanismus bekannt.

Fig. 2 zeigt den in Fig. 1 gezeigten Getränkeautomaten 100 im Falle einer Direktbedienung mit der Tasse 170. Beim Führen der Tasse 170 entlang der Einführrichtung 230 zu dem Gerät kann so von dem Anwender oder Benutzer direkt die Start-/Stopp-Bedienung zur Getränkeerzeugung ausgelöst werden, ohne dass der Benutzer zuerst die Tasse 170 abstellen und in einem zweiten Bedienvorgang den Start-Knopf drücken muss. Hierdurch kann gegebenenfalls eine besonders einfache, direkte und/oder intuitive Kontrolle des Füllstands der Tasse 170 gefördert werden. Anders ausgedrückt kann so eine direkte und intuitive Kontrolle des Interaktions- und Bedienvorgangs ermöglich werden.

Fig. 3 zeigt eine weitere Bedienmöglichkeit der Kaffeemaschine 110 bzw. des Getränkeautomaten 100 gemäß einem Ausführungsbeispiel. Bei dieser Variante ist die Tasse 170 bzw. der Getränkebehälter 150 auf die Abstellfläche 140 abgestellt worden, sodass die Tasse 170 unter dem Auslass 120 in den Fließweg angeordnet ist. Die Bedienung der Schaltfläche 240 erfolgt hierbei über den Finger 250 des Benutzers entlang der Bedienrichtung 260, die mit der Einführrichtung 230 (nicht gezeigt in Fig. 3) übereinstimmt.

Trotz der Möglichkeit der Direktbedienung mit Hilfe der Tasse 170 bzw. des Getränkebehälters 150 ist so auch weiterhin eine gewöhnliche Fingerbedienung seitlich hinter der Tasse 170 auf der Gerätefront, also der Gehäusefläche 220 möglich. Für den Benutzer oder Anwender besteht daher weiter die Möglichkeit zur konventionellen bzw. gewöhnlichen Bedienung in zwei Bedienschritten. Dies ermöglicht einen besonders hohen Bedienkomfort ohne eine Einschränkung hinsichtlich einer Umgewöhnungsphase oder einer Bedienerlernkurve.

Auf der Gerätefront hinter den Brüh- und Zubereitungsraum, also hinter der Brühkammer 130 befindet sich die Schaltfläche 240 als großes Bedienelement. Die Gerätefront wird somit frontseitig horizontal durch die Schaltfläche 240 unterteilt, welche in ihrer Funktion als Wippe ausgeführt ist, somit können an mehreren Positionen auf dem Schaltelement bzw. der Schaltfläche 240 Schaltvorgänge ausgelöst werden. Im Geräteinneren kann jedoch weiterhin mit nur einem elektrischen oder mechanischen Schaltelement die Schaltung detektiert werden, wie dies im Zusammenhang mit Fig. 4 noch näher erläutert wird. Die horizontale Dimension der als Bedienelement dienenden Schaltfläche 240 kann hierbei so ausgelegt sein, dass eine möglichst große Anzahl verschiedener Gefäße zur Direktbedienung genutzt werden kann, wie dies bereits zuvor beschrieben wurde. Ein Ausführungsbeispiel eines Getränkeautomaten ermöglicht so eine Direktbedienung eines solchen Heiß-/Multigetränkegeräts mit einer intuitiven und direkten Start-/Stopp-Bedienung zur Getränkeerzeugung. Die Schaltfläche 240 wird daher auch als Cupswitch bzw. als Tassenschalter für einen entsprechenden Getränkeautomaten 100, also beispielsweise eine Pad-Kaffeemaschine 110, ein Heißgetränkesystem oder auch ein Multigetränkesystem bezeichnet.

Fig. 4 zeigt eine vereinfachte Darstellung eines Wippmechanismus 280. Die Schaltfläche 240, die über die Wippachse 270 verschwenkbar in beide Richtungen gelagert ist, weist in einem Inneren eine L-förmige Struktur 290 auf, die wiederum an ihrem der Schaltfläche abgewandten Ende einen Auslöseabschnitt 300 aufweist, der sich zu beiden Seiten eines Schenkels der L-förmigen Struktur 290 erstreckt. Der Wippmechanismus 280 weist ferner eine Hebelkonstruktion mit einem ersten Hebel 310 und einem zweiten Hebel 320 auf, wobei der erste Hebel 310 über einen ersten Anlenkpunkt 330 mit dem Gehäuse 180 bzw. der Gehäusefläche 220 (beide nicht gezeigt in Fig. 4) mechanisch verschwenkbar gekoppelt, also angelenkt ist. Über einen zweiten Anlenkpunkt 340 ist der erste Hebel 310 mit dem zweiten Hebel 320 verschwenkbar bzw. verdrehbar verbunden, also ebenfalls angelenkt.

Der Wippmechanismus 280 weist ferner einen elektrischen Schalter 350 auf, der beispielsweise als Mikroschalter ausgeführt sein kann, der über zwei optionale Anschlüsse 360-1, 360-2 mit einer nicht in Fig. 4 gezeigte Schaltungen verbindbar sind.

Der elektrische Schalter 350, der Auslöseabschnitt 300 sowie der zweite Hebel 320 sind nun derart angeordnet, dass diese mit dem elektrischen Schalter 350 so zusammenwirken, dass bei einer Bewegung des Auslöseabschnitts 300 oder des zweiten Hebels 320 auf den Schalter 350 zu dieser durch diese mechanischen Elemente schließbar ist, um den elektrischen Stromkreis zwischen den beiden Anschlüssen 360 zu schließen. Im Falle einer Bewegung 370 der Schaltfläche 240 wird der Schalter 350 unmittelbar durch den Auslöseabschnitt 300 geschlossen. Bewegt sich hingegen die Schaltfläche 240 in die entgegengesetzte Richtung, also entlang der als Bewegung 380 in Fig. 4 gezeigten Richtung, drückt der Auslöseabschnitt 300 auf einen Abschnitt des ersten Hebels 310, der auf der dem zweiten Anlenkpunkt und dem zweiten Hebel 320 abgewandten Seite des ersten Anlenkpunkts 330 angeordnet ist. Tritt der Auslöseabschnitt 300 mit dem ersten Hebel 310 in Kontakt, wird so der erste Hebel entsprechend so bewegt, dass der zweite Hebel 320 sich auf den elektrischen Schalter 350 zubewegt und diesen schließt.

Je nach konkreter Implementierung kann gegebenenfalls der zweite Anlenkpunkt 320 auch entfallen. Ist dieser Implementiert, kann es gegebenenfalls ratsam sein, den zweiten Hebel 320 an einer ebenfalls in Fig. 4 nicht gezeigten Führungsstruktur linear entlang zu führen.

Ein Getränkeautomat 100 gemäß einem Ausführungsbeispiel kann so gegebenenfalls eine minimale Gerätebreite ermöglichen, da das Bedienfeld (User Interface) in den Bereich hinter den Brühraum, also in den Bereich hinter der Brühkammer 130 rücken kann, ohne eine konventionelle Bedienung eines Getränkeautomaten unmöglich zu machen oder zu erschweren. Ein Getränkeautomat gemäß einem Ausführungsbeispiel ermöglicht so eine einzigartige Bedienphilosophie, die gegebenenfalls auch als Produktmerkmal mit besonders großer Kommunikations- und Marketingwirkung verwendet werden kann. Durch eine intelligente Wipp- und Übersetzungsmechanik kann gegebenenfalls ein elektrischer und/oder mechanischer Mehraufwand im Geräteinneren durch zusätzliche Schaltelemente vermieden werden.

Ein Getränkeautomat gemäß einem Ausführungsbeispiel ermöglicht so gegebenenfalls mit einfachen konstruktiven und kostengünstigen Mitteln eine Vereinfachung der Bedienung eines Getränkeautomaten ohne jedoch eine intuitive Bedienung desselben zu erschweren. Darüber hinaus kann es gegebenenfalls möglich sein eine optisch gefällige, robustere und gegebenenfalls kompaktere Ausführung eines Getränkeautomaten bereitzustellen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 100: Getränkeautomat
- 110: Kaffeemaschine
- 120: Auslass
- 130: Brühkammer
- 140: Abstellfläche
- 150: Getränkebehälter
- 160: Fließweg
- 170: Tasse
- 180: Gehäuse
- 190: Gehäuseschale
- 200: Flüssigkeitsbehälter
- 210: Abdeckung
- 220: Gehäusefläche
- 230: Einführrichtung
- 240: Schaltfläche
- 250: Finger
- 260: Bedienrichtung
- 270: Wippachse
- 280: Wippmechanismus
- 290: L-förmige Struktur
- 300: Auslöseabschnitt
- 310: erster Hebel
- 320: zweiter Hebel
- 330: erster Anlenkpunkt
- 340: zweiter Anlenkpunkt
- 350: elektrischer Schalter
- 360: Anschluss
- 370: Bewegung
- 380: Bewegung

## Patentansprüche

1. Getränkeautomat (100) mit folgenden Merkmalen:
einem Gehäuse (180), wobei das Gehäuse (180) eine wenigstens abschnittsweise im Wesentlichen senkrecht zu einer Einführrichtung (230) verlaufende Gehäusefläche (220) aufweist,
einem Auslass (120) für ein Getränk;
einer Abstellfläche (140) für einen Getränkebehälter (150), die derart angeordnet ist, dass der Getränkebehälter (150) so unter dem Auslass (120) abstellbar ist, dass das Getränk von dem Auslass (120) in den auf der Abstellfläche (140) abgestellten Getränkebehälter (150) entlang eines Fließwegs (160) fließen kann; und
einer als Teil der Gehäusefläche (220) ausgebildeten Schaltfläche (240) zum Bedienen des Getränkeautomaten (100), die wenigstens abschnittsweise im Wesentlichen senkrecht zu der Einführrichtung (230) des Getränkebehälters (150) derart angeordnet und ausgebildet ist,
- dass die Schaltfläche (240) von einem Benutzer des Getränkeautomaten (100) durch den Getränkebehälter (150) bei einem Einführen desselben entlang der Einführrichtung (230) unter den Auslass (120) bedienbar ist, und
- dass die Schaltfläche (240) von dem Benutzer des Getränkeautomaten (100) mit Hilfe eines Fingers (250) bedienbar ist, wenn der Getränkebehälter (150) unter dem Auslass (120) angeordnet ist, ohne dass der Benutzer in den Fließweg (160) greifen muss, wobei
die Schaltfläche (240) über einen Wippmechanismus (280) betätigbar ist,
**dadurch gekennzeichnet, dass**
der Wippmechanismus (280) eine Wippachse (270) aufweist, die bezogen auf eine Projektion des Fließweges (160) entlang der Einführrichtung (230) auf die Schaltfläche (240) hin seitlich versetzt ist, und/oder
der Getränkeautomat genau ein Schaltelement (350) umfasst, um eine Betätigung des Wippmechanismus (280) unabhängig von der Bewegungsrichtung der Schaltfläche (240) erfassbar zu machen.

2. Getränkeautomat (100) nach Anspruch 1, bei dem die Schaltfläche (240) derart ausgebildet und angeordnet ist, dass die Schaltfläche (240) bei einem auf der Abstellfläche (160) abgestellten Getränkebehälter (150) durch seitliches Drücken entlang der Einführrichtung (230) und/oder schräg zu der Einführrichtung (230) durch den Benutzer bedienbar ist.

3. Getränkeautomat (100) nach Anspruch1, bei dem sich die Schaltfläche (240) im Wesentlichen über die gesamte Breite senkrecht zu der Einführrichtung (230) und des Fließwegs (160) der Gehäusefläche (220) erstreckt.

4. Getränkeautomat (100) nach einem der vorhergehenden Ansprüche 1 oder 2, bei dem sich die Schaltfläche (240) ausgehend von einer Projektion des Fließweges (160) entlang der Einführrichtung (230) auf die Schaltfläche (240) zu beiden Seiten der Projektion wenigstens um einen maximalen Radius eines für den Getränkeautomaten (100) spezifizierten Getränkebehälters (150) erstreckt.

5. Getränkeautomat (100) nach einem der vorhergehenden Ansprüche, bei dem ein Abstand des Auslasses (120) von der Schaltfläche (240) entlang der Einführrichtung (230) kleiner als ein 2-Faches eines minimalen Radius eines für den Getränkeautomaten (100) spezifizierten Getränkebehälters (150) ist.

6. Getränkeautomat (100) nach einem der vorhergehenden Ansprüche, wobei der Getränkeautomat ein Heißgetränkesystem, ein Multigetränkesystem oder eine Kaffeesystem, beispielsweise ein Kaffeepad-Kaffeesystem, eine Kaffeemaschine (110) oder ein Kapsel-Kaffeesystem, umfasst.

## Claims

1. Beverage dispenser (100) having the following features:
a housing (180), wherein the housing (180) has a housing surface (220) extending at least in sections substantially perpendicular to the insertion direction (230),
an outlet (120) for a beverage;
a support surface (140) for a beverage container (150) which is arranged such that the beverage container (150) can be placed under the outlet (120) such that the beverage can flow along a flow path (160) from the outlet (120) into the beverage container (150) placed on the support surface (140); and
a push-button (240), embodied as part of the housing surface (220), for operating the beverage dispenser (100) that is arranged and embodied substantially perpendicular to the insertion direction (230) of the beverage container (150) at least in sections, such that
- the push-button (240) can be operated by a user of the beverage dispenser (100) by inserting the beverage container (150) along the insertion direction (230) to under the outlet (120), and
- the push-button (240) can be operated by the user of the beverage dispenser (100) with the help of a finger (250) when the beverage container (150) is arranged below the outlet (120), without the user having to reach into the flow path (160), wherein
the push-button (240) can be actuated via a rocker mechanism (280),
**characterised in that**
the rocker mechanism (280) has a rocker axis (270) which is offset laterally in relation to a projection of the flow path (160) along the insertion direction (230) to the push-button (240), and/or
the beverage dispenser comprises precisely one switching element (350), in order to enable actuation of the rocker mechanism (280) to be registered regardless of the direction of movement of the push-button (240).

2. Beverage dispenser (100) according to claim 1, wherein the push-button (240) is embodied and arranged such that the push-button (240) can be operated by the user when a beverage container (150) is placed on the support surface (160) by squeezing the sides along the insertion direction (230) and/or at an angle to the insertion direction (230).

3. Beverage dispenser (100) according to claim 1, wherein the push-button (240) extends substantially over the entire width perpendicular to the insertion direction (230) and the flow path (160) of the housing surface (220).

4. Beverage dispenser (100) according to one of the preceding claims 1 or 2, wherein the push-button (240) extends, starting from a projection of the flow path (160), along the insertion direction (230) onto the push-button (240) to both sides of the projection at least by a maximum radius of a beverage container (150) specified for the beverage dispenser (100).

5. Beverage dispenser (100) according to one of the preceding claims, wherein a distance of the outlet (120) from the push-button (240) along the insertion direction is less than twice a minimum radius of a beverage container (150) specified for the beverage dispenser (100).

6. Beverage dispenser (100) according to one of the preceding claims, wherein the beverage dispenser comprises a hot beverage system, a multi-beverage system or a coffee system, for example a coffee pad coffee system, a coffee machine (110) or a capsule coffee system.

## Revendications

1. Distributeur de boissons (100) doté des caractéristiques suivantes :
un boîtier (180), le boîtier (180) présentant une surface de boîtier (220) s'étendant au moins par sections essentiellement perpendiculairement à un dispositif d'introduction (230),
une sortie (120) pour une boisson ;
une surface de dépôt (140) pour un récipient pour boisson (150), laquelle est disposée de manière à ce que le récipient pour boisson (150) puisse être posé en dessous de la sortie (120), que la boisson puisse couler de la sortie (120) dans le récipient pour boisson (150) déposé sur la surface de dépôt (140) le long d'un chemin d'écoulement (160) ; et
une surface de commutation (240) réalisée en tant que partie de la surface de boîtier (220), destinée à la commande du distributeur de boissons (100), laquelle est disposée au moins par sections essentiellement perpendiculairement au dispositif d'introduction (230) du récipient pour boisson (150) et est réalisée de manière
- à ce que la surface de commutation (240) puisse être commandée en dessous de la sortie par un utilisateur du distributeur de boissons (100) au moyen du récipient pour boisson (150) lors d'une introduction de ce dernier le long du dispositif d'introduction (230), et
- à ce que la surface de commutation (240) puisse être commandé par l'utilisateur du distributeur de boissons (100) à l'aide d'un doigt (250) lorsque le récipient pour boisson (150) est disposé en dessous de la sortie (120) sans que l'utilisateur ne doive intervenir dans le chemin d'écoulement (160),
la surface de commutation (240) étant commandable par l'intermédiaire d'un mécanisme de basculement (280),
**caractérisé en ce que**
le mécanisme de basculement (280) présente un axe de basculement (270) qui est latéralement décalé par rapport à une projection du chemin d'écoulement (160) le long du dispositif d'introduction (230) sur la surface de commutation (240), et/ou **en ce que** le distributeur de boissons comprend exactement un élément de commutation (350) afin de rendre détectable un actionnement du mécanisme de basculement (280) indépendamment de la direction de mouvement de la surface de commutation (240).

2. Distributeur de boissons (100) selon la revendication 1, dans lequel la surface de commutation (240) est réalisée et disposée de manière à ce que la surface de commutation (240), lorsqu'un récipient pour boisson (150) est déposé sur la surface de dépôt (160), puisse être commandée par l'utilisateur par pression latérale le long de la direction d'introduction (230) et/ou obliquement par rapport à la direction d'introduction (230).

3. Distributeur de boissons (100) selon la revendication 1, dans lequel la surface de commutation (240) s'étend essentiellement sur toute la largeur perpendiculairement à la direction d'introduction (230) et au chemin d'écoulement (160) de la surface de boîtier (220).

4. Distributeur de boissons (100) selon l'une quelconque des revendications 1 ou 2, dans lequel la surface de commutation (240), en partant d'une projection du chemin d'écoulement (160) le long de la direction d'écoulement (230) sur la surface de commutation (240) vers les deux côtés de la projection, s'étend au moins dans un rayon maximal d'un récipient pour boisson (150) spécifié pour le distributeur de boissons (100).

5. Distributeur de boissons (100) selon l'une quelconque des revendications précédentes, dans lequel un écart de la sortie (120) par rapport à la surface de commutation (240) le long de la direction d'introduction (230) est plus petit que le double d'un rayon minimal d'un récipient pour boisson (150) spécifié pour le distributeur de boissons (100).

6. Distributeur de boissons (100) selon l'une quelconque des revendications précédentes, le distributeur de boissons comprenant un système pour boissons chaudes, un système pour multi-boissons ou un système pour café, par exemple un système pour café en dosettes, une machine à café (110) ou un système pour café en capsules.
